(19) **Europäisches Patentamt**

**European Patent Office**

**Office européen des brevets**

(11) Veröffentlichungsnummer: **0 273 254 B1**

(12) # EUROPÄISCHE PATENTSCHRIFT

(45) Veröffentlichungstag der Patentschrift: **04.03.92**

(51) Int. Cl.⁵: **B65B 1/32**, G01G 15/00

(21) Anmeldenummer: **87118218.4**

(22) Anmeldetag: **09.12.87**

(54) **Verfahren und Vorrichtung zum Abfüllen von Schüttgut, insbesondere Kaffee.**

(30) Priorität: **30.12.86 DE 3644713**

(43) Veröffentlichungstag der Anmeldung:
**06.07.88 Patentblatt 88/27**

(45) Bekanntmachung des Hinweises auf die
Patenterteilung:
**04.03.92 Patentblatt 92/10**

(84) Benannte Vertragsstaaten:
**AT BE CH DE ES FR GB IT LI NL**

(56) Entgegenhaltungen:
**DE-A- 2 320 612**
**DE-A- 2 323 750**
**US-A- 3 073 398**

(73) Patentinhaber: **Jacobs Suchard GmbH**
**Langemarckstrasse 8-20**
**W-2800 Bremen 1(DE)**

(72) Erfinder: **Meerkatz, Joachim**
**Yorckstrasse 84**
**W-1000 Berlin 61(DE)**
Erfinder: **Clausing, Gerhard**
**Zevener Ring 2**
**W-2724 Sottrum(DE)**

(74) Vertreter: **Bolte, Erich, Dipl.-Ing. et al**
**Patentanwälte Dipl.-Ing. Hans Meissner**
**Dipl.-Ing. Erich Bolte Hollerallee 73**
**W-2800 Bremen 1(DE)**

## Beschreibung

Die Erfindung betrifft ein Verfahren zum Abfüllen von Schüttgut, insbesondere von Kaffee sowie eine Vorrichtung zur Durchführung des Verfahrens nach dem Oberbegriff des Patentanspruches 1 bzw. 11.

Bei der Kaffee-Abfüllung in Verpackungen tritt das Problem auf, daß Schwankungen in den im allgemeinen volumetrisch arbeitenden Abfüllungsmaschinen, im Schüttgewicht des Kaffees und im Tara-Gewicht auftreten. Vom Gesetzgeber ist eine exakte Einhaltung des Mittelwertes des Packungsinhaltes gefordert, wobei Überschreitungen des Packungsinhaltes zulässig sind, Unterschreitungen jedoch nicht. Die zulässigen Streuungswerte sind ebenfalls festgelegt.

Um nun die Mindestwerte einzuhalten, füllt man im Mittel mehr Kaffee ein als notwendig.

Was die Schwankungen betrifft, die durch die Abfüllungsmaschinen oder durch Schwankungen im Schüttgewicht des Kaffees verursacht werden, so sind hier bereits umfangreiche Maßnahmen zur Minimierung der Schwankungen getroffen worden.

Beim Taragewicht, also dem Gewicht der zu befüllenden Tüten, sind ebenfalls gewisse Schwankungen nicht zu vermeiden, da die Folien, aus welchen die Tüten hergestellt werden, hinsichtlich ihrer Dicke aufgrund der (bekannten) Herstellungsprozesse (Blasen) nur in bestimmten Grenzen konstant sind. Da die Zuschnitte für jede Tüte gleich groß sind, ergeben sich Schwankungen im Taragewicht, die momentan bei etwa 8 % liegen.

Selbstverständlich tritt dieselbe Problematik bei allen anderen Schüttgütern ebenfalls auf, wobei das Problem um so schwerer wiegt, je teurer der Packungsinhalt ist.

Aus der US-A-3 073 398 sind Vorrichtung und Verfahren zum Abfüllen von Schüttgut bekannt, bei denen eine laufende Ermittlung des Tara-Gewichtes und Regelung der Einfüllmenge über Vergleich mit einem laufend ermittelten Brutto-Gewicht durchgeführt werden. Das bekannte Verfahren bzw. die bekannte Vorrichtung ermöglichen jedoch nur relativ geringe Durchsatzraten bei hohem apparativen Aufwand, da herkömmliche Waagen nicht mehr verwendbar sind. Insbesondere liegt ein Hauptproblem in der bei so geringen Gewichten (der unbefüllten Tüten) großen Nachschwingzeit der Waagen.

Ausgehend vom oben genannten Stand der Technik liegt der vorliegenden Erfindung die Aufgabe zugrunde, Verfahren und Vorrichtung der eingangs genannten Art dahingehend weiterzubilden, daß mit geringerem Aufwand als bisher eine hinreichend exakte Netto-Einwaage erzielbar ist.

Diese Aufgabe wird durch die im Kennzeichen der Patentansprüche 1 bzw. 11 aufgeführten Merkmale gelöst.

Dadurch, daß man immer wieder Stichproben nimmt und nicht nur zu Schichtbeginn gelingt es, bei sprungförmigen Schwankungen während des Betriebes Fehler auszumerzen, die bisher toleriert werden mußten. Derartige sprungförmige Schwankungen treten z.B. auf, wenn innerhalb einer Folienrolle eine Nahtstelle auftritt, die von einer Folienbahn zur nächsten Folienbahn (aus einer anderen Charge) überleitet. Überraschenderweise konnte gezeigt werden, daß eine stichprobenweise (aber kontinuierlich) durchgeführte Messung der Tara-Vorgabe zur Sollwerteinstellung in einer geschlossenen Regelschleife verwendbar ist. Hierbei ist es von Vorteil, wenn man eine gleitende Mittelwertsbildung über eine definierte Anzahl von Leerpackungen durchführt.

Besonders schnell reagiert die Regelung dann, wenn man die gleitende Mittelwertsbildung in zwei Gruppengrößen, einer größeren und einer kleineren Gruppe, durchführt und den Mittelwert der kleineren Gruppe dann der Regelung zugrundelegt, wenn dieser vom Mittelwert der grösseren Gruppe um mindestens bzw. mehr als einen vorbestimmten Betrag abweicht. Einerseits wird dadurch das Regelverhalten im allgemeinen (wenn also der Mittelwert der kleineren Gruppe innerhalb der zulässigen Schwankungsbreite liegt) nicht unnötig unruhig, andererseits kann dennoch eine schnelle Ausregelung von sprungförmigen Änderungen erfolgen.

Bei der erfindungsgemäßen Vorrichtung führt man vorzugsweise die auszuwiegenden Tüten über eine Blasvorrichtung einer (elektronischen) Waage zu.

Weitere bevorzugte Ausführungsformen der Erfindung ergeben sich aus den Unteransprüchen und den nachfolgenden Ausführungsbeispielen bevorzugter Ausführungsformen der Erfindung, die anhand von Abbildungen näher beschrieben werden. Hierbei zeigen:

Fig. 1    ein prinzipielle Darstellung der Gesamtanordnung einer Anlage;

Fig. 2    eine prinzipielle Darstellung der Regelschleife;

Fig. 3    eine schematisierte Darstellung der Ausschleuse-Vorrichtung;

Fig. 4    eine perspektivische Darstellung der Tara-Waage mit Schieber; und

Fig. 5    ein Diagramm zur Darstellung des Regelverhaltens.

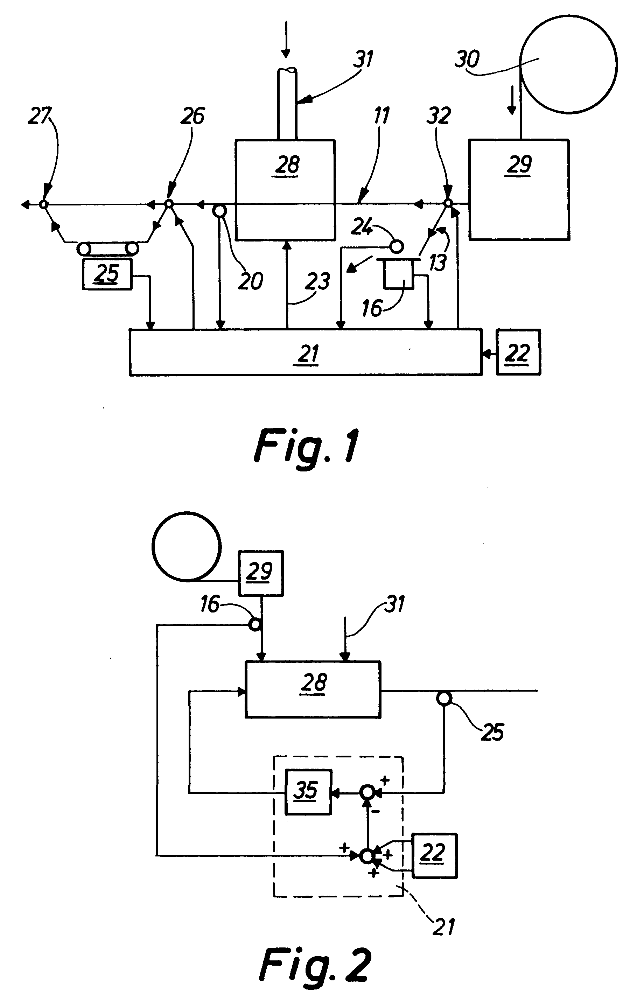

In Fig. 1 ist eine bevorzugte Ausführungsform einer Abfüllanlage gezeigt. Mit der Bezugsziffer 29 ist eine Maschine zum Herstellen von Tüten bezeichnet, der das Folienmaterial von einem Folienwickel 30 zugeführt wird. Die fertig gefalteten und oben offenen Tüten werden auf einem Förderband 11 gefördert, das die Tüten einer Abfüllmaschine 28 zuführt. Der Abfüllmaschine 28 wird über eine Kaffee-Zuführung 31 Kaffee zugeführt, der in die Tüten eingefüllt werden soll. Das Förderband 11 verläßt die Abfüllmaschine 28 mit den fertig befüllten und verschlossenen Packungen.

Zwischen der Tütenformermaschine 29 und der Abfüllmaschine 28 ist eine Tütenweiche 32 vorgesehen, deren Ausgestaltung weiter unten näher beschrieben wird. Die Weiche 32 wird von einer Regeleinheit 21 zu bestimmten Zeitpunkten betätigt und zwar derart, daß einzelne Tüten vom Förderband 11 ausgeschleust und über ein Förderrohr 13 eine Tara-Waage 16 zugeführt werden.

Die Tara-Waage 16 wandelt das Gewicht der Tüte in ein elektrisches Ausgangssignal um, das wiederum der Regeleinheit 21 zugeführt wird. Nach dem Wiegen wird die gewogene Tüte von der Tara-Waage 16 über eine von der Regeleinheit 21 steuerbare Vorrichtung abgeschoben, die weiter unten näher beschrieben ist. Weiterhin ist über der Tara-Waage 16 eine Lichtschranke 24 vorgesehen, über die festgestellt werden kann, ob eine Tüte auf der Tara-Waage 16 liegt bzw. ob die Tüte richtig liegt. Das Ausgangssignal der Lichtschranke 24 wird ebenfalls der Regeleinheit 21 zugeführt.

Die Anlage ist weiterhin mit einem Bandfühler 20 versehen, über den die Taktrate festgestellt werden kann, mit der die Anlage arbeitet. Dieser Bandfühler 20 dient (unter anderem) zur Synchronisation beim Ausschleus-Vorgang.

Nach der Abfüllmaschine 28 ist eine ebenfalls von der Regeleinheit 21 gesteuerte Abzweigweiche 26 zum Ausschleusen gefüllter Packungen vorgesehen. Diese gefüllten Packungen werden über eine (elektronische) Brutto-Waage 25 geleitet und über eine Einschleusweiche 27 dem Förderstrom wieder zugeführt. In der Brutto-Waage 25 wird das Gewicht der gewogenen Packungen in elektrische Signale umgewandelt, die wieder der Regeleinheit 21 zugeführt werden.

Mit dem Eingang der Regeleinheit 21 ist weiterhin eine Eingabeeinheit 22 verbunden, über welche Vorgabewerte eingebbar sind.

Ein Stellausgang 23 ist mit einem Stellorgan der Abfüllmaschine 28 verbunden, wobei die von der Abfüllmaschine 28 eingefüllte Kaffeemenge über das Stellsignal des Stellausganges 23 einstellbar ist.

Der regeltechnische Zusammenhang wird im folgenden anhand von Fig. 2 näher beschrieben.

Über den Fühler 25 (Brutto-Waage) wird das Bruttogewicht der befüllten (und verschlossenen) Packungen gewogen und einem Vergleicher zugeführt. Weiterhin wird dem Vergleicher ein Sollwert zugeführt, der aus dem eigentlichen Sollwert, nämlich dem Packungsinhalt, einer Konstant-Taravorgabe (Leim-Gewicht, Etiketten-Gewicht etc.) und dem Ausgangssignal des Meßfühlers 16 (Tara-Waage) gebildet wird. Die beiden ersteren Werte werden über die Eingabeeinheit 22 eingegeben.

Der Meßfühler 16 (Tara-Waage) sitzt am Ausgang der Tütenformmaschine 29, die der Abfüllmaschine 28 die Tüten zuführt.

Die Abweichung zwischen gemessenem Bruttowert und Soll-Bruttowert wird einem Rechner 35 zugeführt, der Bestandteil der Regeleinheit 21 ist und ein Ausgangssignal erzeugt, das zur Einstellung der Füllmenge in der Abfüllmaschine 28 dient. Auf diese Weise ist somit eine geschlossene Regelschleife gebildet, die eine konstante Abfüllmenge (Abfüllgewicht) unabhängig von Schwankungen im Taragewicht ermöglicht.

Im folgenden wird eine bevorzugte Ausführungsform desjenigen Vorrichtungsteiles beschrieben, der zum Ausschleusen und Abwiegen der leeren Packungen dient. Wesentliches Problem hierbei ist die Fragilität und das geringe Gewicht der Packungen 10.

Die auf dem Förderband 11 ankommenden Packungen 10 werden in Förderzellen 12 gehalten. Die Förderzellen 12 sind nach unten mit einer Öffnung versehen, wobei unter dem Förderband 11 die Mündung einer Ausblasleitung 18 derart angebracht ist, daß die Öffnungen in den Förderzellen beim Laufen des Förderbandes 11 an dieser vorbeistreichen.

Die Ausblasleitung 18 steht mit einer nicht gezeigten Druckluftquelle über ein Magnetventil 19 in Verbindung. Das Magnetventil 19 wird über einen Ausgang der Regeleinheit 21 angesteuert.

Über dem Förderband 11 bzw. den Förderzellen 12 ist die Mündung eines Förderrohres 13 positioniert, dessen Querschnitt im wesentlichen dem der zu fördernden Tüten 10 angepaßt ist. Die Anordnung ist also derart getroffen, daß bei korrekter Positionierung einer Förderzelle 12 mit darin befindlicher Tüte 10 über der Mündung der Ausblasleitung 18 Tüten 10 in das Förderrohr 13 eingeblasen werden können. Der gerichtete Luftstrom wird hierbei so bemessen, daß eine in die Leitung 13 geblasene Tüte durch die Leitung hindurch gefördert wird.

In ihrem Endabschnitt 34 verläuft die Leitung 13 im wesentlichen horizontal und ist nach unten offen. In der Achse des Endabschnittes 34 ist ein Prallblech 14 angebracht, so daß Packungen 10, die mit einer gewissen Fördergeschwindigkeit in den Endabschnitt 34 gelangen, am Prallblech 14 abgebremst werden und nach unten fallen.

Unterhalb des Endabschnittes 34 der Rohrleitung 13 ist eine Tara-Waage 16 so angebracht, daß herabfallende Tüten 10 auf den Wägeteller 33 der Waage 16 fallen. Vorzugsweise ist die Waage 16 als elektronische Waage ausgebildet, die sich immer wieder selbsttätig (im unbelasteten Zustand) abgleicht. Ihr Ausgang ist auf einen Eingang der Regeleinheit 21 geführt.

Bei der Waage 16 ist ein Schieber 15 angebracht, der über ein Ausgangssignal der Regeleinheit 21 betätigbar ist. Der Schieber 15 ist hierbei derart angeordnet, daß eine auf dem Wägeteller 33 der Waage 16 befindliche Packung 10 bei Betätigung des Schiebers 15 vom Teller 33 geschoben wird. Weiterhin ist bei der Waage 16 eine Abfuhrrutsche 17 angebracht, auf die eine durch den Schieber 15 vom Teller 33 geschobene Tüte 10 fallen kann, um dann einem Abfallbehälter zugeführt zu werden.

Statt durch den Schieber 15 können die Packungen 1o durch Blasluft (Blasdüse - nicht dargestellt) vom Teller 33 ab-und dem Abfallbehälter zugefördert werden.

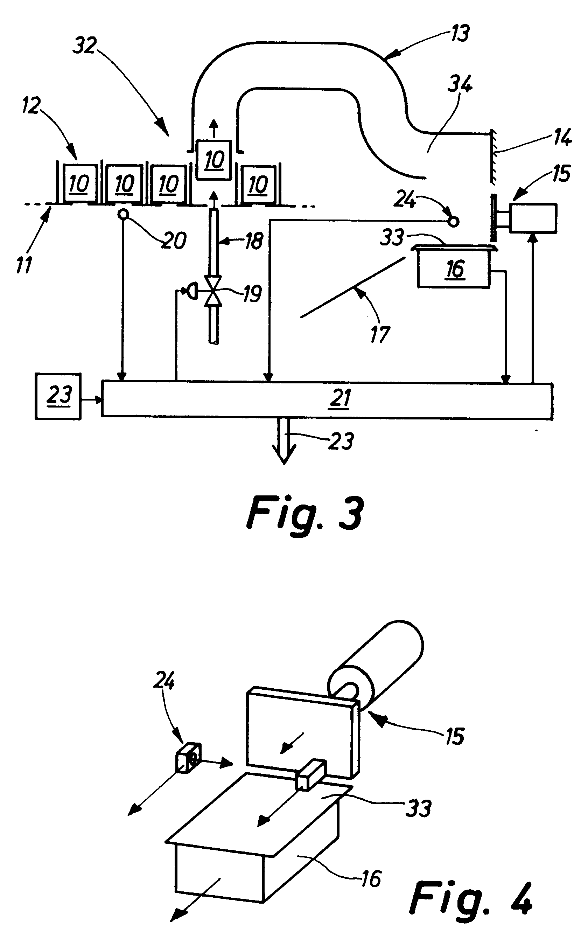

Weiterhin ist oberhalb des Wägetellers 33 eine Lichtschranke 24, die weiter unten näher beschrieben wird, angebracht, die mit einem Eingang der Regeleinheit 21 in Verbindung steht. Die Anbringungsweise der Lichtschranke 24 (siehe Fig. 4) ist hierbei derart, daß dann, wenn eine Tüte 10 auf dem Wägeteller 33 liegt, der Lichtweg der Lichtschranke 24 unterbrochen wird, so daß die Anwesenheit einer Tüte 10 auf dem Wägeteller 33 detektierbar ist.

Vorzugsweise ist im Endabschnitt 34 des Förderrohres 13 ebenfalls eine Lichtschranke (nicht gezeigt) angebracht, die mit der Regeleinheit 21 in Verbindung steht und über die ein Verklemmen von Tüten im Endabschnitt 34 detektierbar ist.

Es ist ein Bandfühler 20 in der Nähe des Förderbandes 11 vorgesehen, dessen Ausgangssignale der Regeleinheit 21 zugeführt werden, um die Ansteuerung des Magnetventiles 19 mit der Taktrate des Förderbandes 11 zu synchronisieren.

Die Eingabeeinheit 23, die mit einem Eingang der Regeleinheit 21 in Verbindung steht, ist in Fig. 3 der Vollständigkeit halber ebenfalls angegeben. Der Stellausgang 23 der Regeleinheit 21 ist in Fig. 3 der Vollständigkeit halber ebenfalls angegeben.

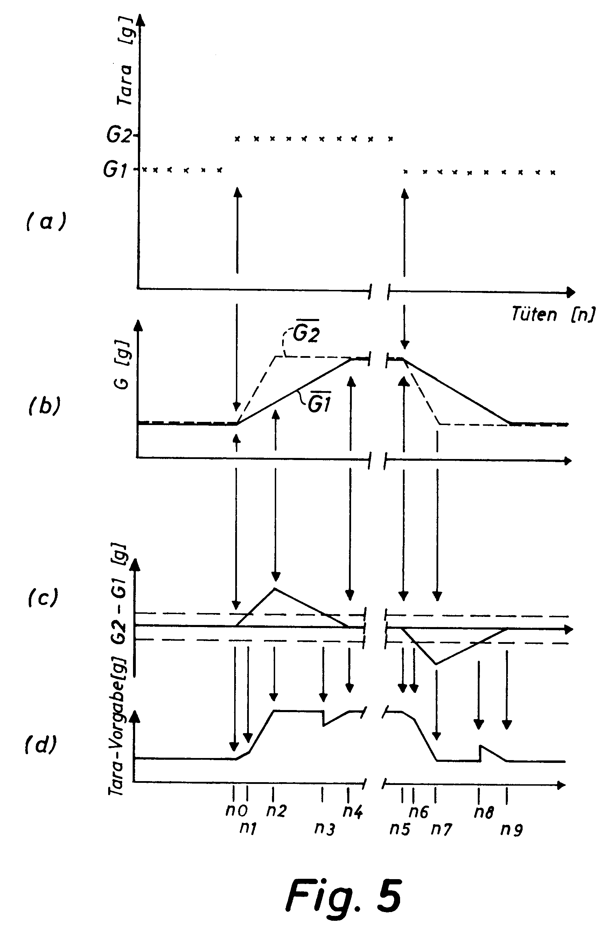

Im folgenden wird die erfindungsgemäße Verfahrensweise, die sich mit der oben beschriebenen Vorrichtung durchführen läßt, anhand der Fig. 5 näher beschrieben. In dieser Abbildung ist nach rechts die Anzahl der Tüten bzw. bei konstanter Fördergeschwindigkeit des Bandes 11 die Zeit aufgetragen.

In Fig. 5 (a) ist nach oben das Taragewicht, also das Gewicht der leeren Tüten aufgetragen, wobei zur Verdeutlichung des Regelverhaltens eine sprungförmige Änderung des Taragewichtes vom Gewicht G1 zum Gewicht G2 und wieder zurück zum Gewicht G1 gezeigt ist.

Wenn man nun zwei (gleitende) Mittelwerte $\overline{G1}$ und $\overline{G2}$ bildet, wobei der eine Mittelwert $\overline{G1}$ (bei dem gezeigten Beispiel) aus acht Tüten und der zweite Mittelwert $\overline{G2}$ aus drei Tüten gebildet wird, so ergibt sich ein Mittelwertsverlauf, wie er in Fig. 5 (b) gezeigt ist, wobei in der Abbildung noch zwischen den an sich stufenförmig verlaufenden Werten linear interpoliert wurde. Aus Fig. 5 (b) ist also ersichtlich, daß eine sprungförmige Änderung des Taragewichtes in einer rampenförmigen langsamen Änderung des Mittelwertes $\overline{G1}$ und in einer (ebenfalls rampenförmigen) schnelleren Änderung des Mittelwertes $\overline{G2}$ resultiert. Dies gilt sowohl für den Anstieg als auch den Abfall der Kurven.

Mit der erfindungsgemäßen Vorrichtung (bzw. über den Rechner 35) wird nicht nur diese Mittelwertsbildung durchgeführt, sondern auch eine Differenzbildung zwischen den beiden Mittelwerten $\overline{G1}$ und $\overline{G2}$. Das Ergebnis dieser Differenzbildung ist in Fig. 5 (c) gezeigt. Weiterhin wird die Differenz mit einem Schwellenwert (strichlierte Linie in Fig. (c)) verglichen. Gemäß der vorliegenden Erfindung wird nun im Normalfall der Mittelwert $\overline{G1}$, der über die größere Probenanzahl gewonnen wurde, als Tarawert der Regelung (siehe Fig. 2) zugrunde gelegt. Überschreitet aber die Differenz zwischen den beiden Mittelwerten den vorbestimmten Schwellenwert, wie dies zum Zeitpunkt n1 gezeigt ist, so wird der Mittelwert $\overline{G2}$ als Tarawert der Regelung zugrunde gelegt. Dieser Sachverhalt geht aus Fig. 5 (d) genauer hervor. Die resultierende Kurve, die das der Regelung zugrunde gelegte Taragewicht repräsentiert, steigt also bei einer sprungförmigen Änderung der tatsächlichen Meßwerte zunächst entsprechend der Steigung der Mittelwertskurve $\overline{G1}$ an (zwischen n0 und n1). Sobald aber die Differenz zwischen den beiden Mittelwerten $\overline{G1}$ und $\overline{G2}$ die Schwelle überschreitet, ändert sich die Tara-Vorgabe entsprechend dem steileren Anstieg der Mittelwertskurve $\overline{G2}$ schnell (zwischen n1 und n2), so daß der Tara-Wert, welcher der Regelung zugrunde gelegt wird, sehr schnell den tatsächlichem Wert angenähert wird. Beim Zurückgehen des Tara-Wertes vom Gewicht G2 zum Gewicht G1 verläuft der Vorgang umgekehrt.

Bei der hier gezeigten, sehr einfachen Ausführungsform der Erfindung ergeben sich durch das Hin- und Herspringen zwischen den beiden Mittelwerten $\overline{G1}$ und $\overline{G2}$ Schwankungen im Regelverhalten, die in Fig. 5 (d) zwischen den Zeitpunkten n3 und n4 bzw. n8 und n9 zu sehen sind. Derartige Schwankungen können bei einer anderen bevorzugten Ausführungsform der Erfindung dadurch ausgeglichen werden, daß das Springen vom Mittelwert $\overline{G1}$ zum Mittelwert $\overline{G2}$ abrupt, das Zurückspringen vom Mittelwert $\overline{G2}$ zum Mittelwert $\overline{G1}$ (bei der Berechnung der Tara-Vorgabe) aber mit einer Verzögerung erfolgt.

Überraschenderweise hat es sich gezeigt, daß man mit dem erfindungsgemäßen Verfahren ausgezeichnete Ausregelungen von Schwankungen des Taragewichtes aufgrund von Schwankungen der Folienstärke erzielen kann. Es genügt hierbei eine Bruttogewichtsmessung von 10 % durchzuführen, während die Taragewichtsbestimmung bei nur 0,75 % der leeren Tüten durchgeführt wird. Dadurch, daß die leeren Tüten verworfen werden, kann die Taktrate der Vorrichtung wesentlich gesteigert werden, es ist nämlich nicht notwendig, die fragilen leeren Tüten wieder in den Prozeß einzuschleusen. Nachdem aber nur 0,75 % der leeren Tüten verworfen werden, hält sich der Verlust in durchaus tragbaren Grenzen.

Vorzugsweise wird der in der Regeleinheit 21 (bzw. vom Rechner 35) ermittelte Korrekturwert für die Verstellung der Befüllungsmaschine über ein motorisch betriebenes Potentiometer dieser Befüllungsmaschine zugeführt. Das motorisch betriebene Potentiometer wird vorzugsweise anstelle des ohnehin hand-einstellbaren Potentiometers verwendet, wobei Umschaltmittel vorgesehen sind, so daß die Anlage im Bedarfsfall auf Handeinstellung umgeschaltet werden kann.

Weiterhin werden vorzugsweise alle Einzelmessungen von Tara- und Bruttogewicht mit dem momentanen Mittelwert verglichen und dann verworfen, also der weiteren Mittelwertsbildung nicht zugrunde gelegt, wenn sie mehr als einen vorbestimmten Betrag vom momentanen Mittelwert abweichen. Dadurch führen "Ausreißer" nicht zu einem ungewollten Regelvorgang.

Weiterhin wird vorzugsweise das Meßergebnis aus allen Tara- und Bruttomessungen gespeichert und dokumentiert. Diese Dokumentation kann dann zu Kontrollzwecken (durch den Anwender oder auch durch die staatlichen Aufsichtsorgane) herangezogen werden. Dies ist ein weiterer, ganz wesentlicher Vorteil der vorliegenden Erfindung, der bisher nicht gegeben war.

Wenn man die mit der erfindungsgemäßen Vorrichtung bzw. mit dem erfindungsgemäßen Verfahren erzielbare Einwiegegenauigkeit mit der bisher möglichen Einwiegegenauigkeit vergleicht, so werden die Vorteile der vorliegenden Erfindung ganz offensichtlich: Bisher muß man im Mittel anstelle der geforderten 500 g Einwaage 501 g einfüllen, damit die zulässigen Mittelwerte und Streuungswerte sicher eingehalten werden. Nachdem das Taragewicht 19 g beträgt und die Schwankungen (wie oben angegeben) bei etwa 8 %, also bei 1,5 g pro Packung liegen, kann man bei Anwendung der vorliegenden Erfindung auf eine Einwaage von ca. 500,1 bis 500,2 g kommen. Der Aufwand hierfür ist sowohl verfahrens- als auch vorrichtungsmäßig äußerst gering.

**Patentansprüche**

1. Verfahren zum Abfüllen von Schüttgut, insbesondere von Kaffee in Verpackungen, wobei man die Füllmenge einer Abfüllmaschine entsprechend dem Bruttogewicht abgefüllter Packungen und einer Tara-Vorgabe einstellt, **dadurch gekennzeichnet,** daß man die das Gewicht der leeren Packung berücksichtigende Tara-Vorgabe stichprobenweise ermittelt und den ermittelten Wert des Bruttogewichtes abzüglich des ermittelten Wertes der Tara-Vorgabe und abzüglich einer konstante Gewichtsanteile wie Leim-Gewicht, Etiketten-Gewicht oder dergleichen berücksichtigende Konstant-Tara-Vorgabe der Abfüllmaschine als Sollwert in einer geschlossenen Regelschleife zuführt.

2. Verfahren nach Anspruch 1, **dadurch gekennzeichnet ,** daß man die Tara-Vorgabe durch stichprobenweises Auswiegen leerer Packungen ermittelt.

3. Verfahren nach Anspruch 2, **dadurch gekennzeichnet ,** daß man die Stichproben in regelmäßigen Abständen durchführt.

4. Verfahren nach einem der vorhergehenden Ansprüche, **dadurch gekennzeichnet ,** daß man über mehrere Stichproben mittelt und den Mittelwert der Regelung zugrundelegt.

5. Verfahren nach Anspruch 4, **dadurch gekennzeichnet,** daß man eine gleitende Mittelwertsbildung über eine definierte Anzahl von Leerpackungen durchführt.

6. Verfahren nach Anspruch 5, **dadurch gekennzeichnet,** daß man den Wert einer einzelnen Stichprobe, der vom momentanen Mittelwert um mehr als einen vorausbestimmten Maximal-Betrag abweicht, verwirft, ohne ihn zur weiteren Mittelwertsbildung zu verwenden.

7. Verfahren nach einem der Ansprüche 5 oder 6, **dadurch gekennzeichnet,** daß man die gleitende Mittelwertsbildung in zwei Gruppengrößen - einer größeren und einer kleineren Gruppe - durchführt und den Mittelwert der kleineren Gruppe dann (und nur dann) der Regelung zugrundelegt, wenn dieser vom Mittelwert der größeren Gruppe um mindestens einen vorbestimmten Betrag abweicht.

8. Verfahren nach einem der vorhergehenden Ansprüche, **dadurch gekennzeichnet,** daß man das Bruttogewicht stichprobenweise ermittelt.

9. Verfahren nach Anspruch 8,
**dadurch gekennzeichnet,**
daß man die Brutto-Stichproben häufiger als die Tara-Stichproben zieht.

10. Verfahren nach einem der vorhergehenden Ansprüche,
**dadurch gekennzeichnet,**
daß man die gewogenen Leerpackungen verwirft.

11. Vorrichtung zum Abfüllen von Schüttgut, insbesondere von Kaffee, mit einer Tütenformmaschine (29) zum Herstellen von zu befüllenden Tüten (10), mit einer Tara-Waage (16) zum Wiegen zu befüllender Tüten, einer Abfüllmaschine (28) zum Füllen der Tüten (10) mit dem Schüttgut, mit einer Brutto-Waage (25) zum Abwiegen der gefüllten Tüten (10) und mit einem Förderband (11) zum Fördern der Tüten (10),
**gekennzeichnet** durch
Mittel (Weiche 32) zum Ausschleusen leerer Tüten (10) vom Förderband (11),
Fördermittel (Förderrohr 13) zum Fördern der ausgeschleusten Tüten zur Tara-Waage (16),
eine Einrichtung (22) zur Eingabe einer konstante Gewichtsanteile, wie Leimgewicht, Etikettengewicht o.dgl., berücksichtigende Konstant-Tara-Vorgabe,
und durch eine Regeleinheit (21), die eingangsseitig über Signalleitungen mit Meßausgängen der Tara-Waage (16) und der Brutto-Waage (25) in Verbindung steht, und deren Stellausgang (23) mit der Abfüllmaschine (28) und den Mitteln (32) zum Ausschleusen der leeren Tüten in einer derartigen steuernden Verbindung steht, daß leere Tüten (10) in definierter Häufigkeit ausgeschleust und gewogen werden und die Abfüllmaschine (28) bezüglich der Abfüllmenge entsprechend des ermittelten Wertes des Bruttogewichtes abzüglich des ermittelten Wertes des Tara-Gewichtes und der Konstant-Tara-Vorgabe eingestellt wird.

12. Vorrichtung nach Anspruch 11,
**dadurch gekennzeichnet,**
daß die Weiche (32) zum Ausschleusen der leeren Tüten (10) eine Blasvorrichtung (18) mit steuerbarem Ventil (19) umfaßt.

13. Vorrichtung nach Anspruch 12,
**dadurch gekennzeichnet,**
daß das Förderband (11) Durchlaßöffnungen umfaßt, bei denen die Blasvorrichtung (18) derart angebracht ist, daß die Tüten (10) nach oben aus dem Förderstrom ausblasbar sind.

14. Vorrichtung nach einem der Ansprüche 11 bis 13,
**dadurch gekennzeichnet,**
daß die Fördermittel (13) zum Fördern der ausgeschleusten Tüten (10) in definiertem Abstand über der Tara-Waage (16) enden, so daß die ausgeschleusten Tüten (10) auf einen Wägeteller (33) der Tara-Waage (16) fallen.

15. Vorrichtung nach Anspruch 14,
**dadurch gekennzeichnet,**
daß über dem Wägeteller (33) der Tara-Waage (16) ein von der Regeleinheit (21) betätigbare Abfördereinrichtung (15) derart angebracht ist, daß auf dem Wägeteller (33) liegende Tüten einer Abführrutsche (17) zuführbar sind.

16. Vorrichtung nach einem der Ansprüche 14 oder 15,
**dadurch gekennzeichnet,**
daß über dem Wägeteller (33) eine, mit einem Eingang der Regeleinheit (21) verbundene Detektorvorrichtung (Lichtschranke 24) zum Feststellen der Anwesenheit von Tüten (10) auf dem Wägeteller (33) angeordnet ist.

17. Vorrichtung nach einem der Ansprüche 12 bis 16,
**dadurch gekennzeichnet,**
daß die Fördermittel (13) zum Fördern der ausgeschleusten Tüten (10) als Rohrleitung ausgebildet sind.

18. Vorrichtung nach Anspruch 17,
**dadurch gekennzeichnet,**
daß die Rohrleitung (13) in ihrem Endabschnitt (34) im wesentlichen horizontal verläuft, und daß ein Prallblech (14) derart senkrecht zur Rohr- bzw. Förderrichtung über dem Wägeteller (33) angebracht ist, daß die geförderten Tüten (10) am Prallblech (14) abgebremst werden und nach unten, auf dem Wägeteller (33) fallen.

19. Vorrichtung nach Anspruch 15,
**dadurch gekennzeichnet,**
daß die Tüten (1o) durch eine Blasvorrichtung (Blasdüse) mittels Blasluft von der Tara-Waage (16) abförderbar sind.

20. Vorrichtung nach einem der Ansprüche 11 bis 19,
**dadurch gekennzeichnet,**
daß die Regeleinheit (28) eingangsseitig mit einer Eingabeeinheit (22) verbunden ist, über die (weitere) Tara-Vorgaben eingebbar sind.

**21.** Vorrichtung nach einem der Ansprüche 11 bis 20,
**dadurch gekennzeichnet,**
daß die Regeleinheit (21) einen Rechner (35) umfaßt.

## Claims

**1.** Method of packaging fluent solid material, in particular coffee in packets, with the filling quantity of a filling machine being set in accordance with the gross weight of filled packets and a tare allowance, characterised in that the tare allowance, taking into account the weight of the empty packaging, is determined by random sampling and the value of the gross weight determined less the value of the tare weight determined and less a constant tare allowance, taking into account constant weight components such as glue weight, label weight or the like, is fed to the filling machine as a nominal value in a closed control loop.

**2.** Method according to Claim 1, characterised in that the tare allowance is determined by weighing out empty packets by random sampling.

**3.** Method according to Claim 2, characterised in that the random sampling is carried out at regular intervals.

**4.** Method according to one of the preceding claims, characterised in that an average is taken over several random samples and the average value is taken as a basis for the control.

**5.** Method according to Claim 4, characterised in that a sliding average value is formed over a defined number of empty packets.

**6.** Method according to Claim 5, characterised in that the value of an individual random sample which deviates from the instantaneous average value by more than a predetermined maximum amount is rejected without using it in further average value formation.

**7.** Method according to one of Claims 5 or 6, characterised in that the sliding average value is formed in two group sizes - a larger and a smaller group - and the average value of the smaller group is then (and only then) taken as a basis for the control if it deviates from the average value of the larger group by at least a predetermined amount.

**8.** Method according to one of the preceding claims, characterised in that the gross weight is determined by random sampling.

**9.** Method according to Claim 8, characterised in that the gross random samples are taken more frequently than the tare random samples.

**10.** Method according to one of the preceding claims, characterised in that the weighed empty packets are rejected.

**11.** Apparatus for packaging fluent solid material, in particular coffee, comprising a bag forming machine (29) for producing bags (10) to be filled, with a tare balance (16) for weighing bags to be filled, a filling machine (28) for filling the bags (10) with the fluent solid material, with a gross balance (25) for weighing the filled bags (10), and a conveyor belt (11) for conveying the bags (10), characterised by means (switch 32) for filtering out empty bags (10) from the conveyor belt (11), conveying means (conveying tube 13) for conveying the filtered-out bags to the tare balance (16), a device (22) for inputting a constant tare allowance, taking into account constant weight components such as glue weight, label weight or the like, and by a control unit (21) which is connected on the input side via signal lines to the measuring outputs of the tare balance (16) and the gross balance (25), and its regulating output (23) is connected in such a controlling manner to the filling machine (28) and the means (32) for filtering out the empty bags that empty bags (10) are filtered out and weighed at a defined frequency, and the filling machine (28), with regard to the filling quantity, is set in accordance with the value of the gross weight determined less the value of the tare weight determined and the constant tare allowance.

**12.** Apparatus according to Claim 11, characterised in that the switch (32) for filtering out the empty bags (10) comprises a blast apparatus (18) with a controllable valve (19).

**13.** Apparatus according to Claim 12, characterised in that the conveyor belt (11) includes passage openings at which the blast apparatus (18) is attached in such a way that the bags (10) can be blown upwards out of the conveying flow.

**14.** Apparatus according to one of Claims 11 to 13, characterised in that the conveying means (13) for conveying the filtered-out bags (10) terminate at a defined distance above the tare balance (16) so that the filtered-out bags (10) fall onto a weighing plate (33) of the tare balance (16).

15. Apparatus according to Claim 14, characterised in that a discharge device (15) which can be actuated by the control unit (21) is attached above the weighing plate (33) of the tare balance (16) in such a way that bags lying on the weighing plate (33) can be fed to an exit shute (17).

16. Apparatus according to one of Claims 14 or 15, characterised in that a detector apparatus (light barrier 24) which is connected to an input of the control unit (21) and is intended for establishing the presence of bags (10) on the weighing plate (33) is arranged above the weighing plate (33).

17. Apparatus according to one of Claims 12 to 16, characterised in that the conveying means (13) for conveying the filtered-out bags (10) is designed as a tube line.

18. Apparatus according to Claim 17, characterised in that the tube line (13) runs essentially horizontally in its end section (34), and that a baffle plate (14) is attached above the weighing plate (33) perpendicularly to the tube or conveyor direction in such a way that the conveyed bags (10) are slowed down on the baffle plate (14) and fall down onto the weighing plate (33).

19. Apparatus according to Claim 15, characterised in that the bags (10) can be discharged from the tare balance (16) by a blast apparatus (blast nozzle) by means of an air blast.

20. Apparatus according to one of Claims 11 to 19, characterised in that the control unit (28) (sic) is connected on the input side to an input unit (22) via which the (further) tare allowances can be fed in.

21. Apparatus according to one of Claims 11 to 20, characterised in that the control unit (21) comprises a computer (35).

**Revendications**

1. Procédé de remplissage de matières en vrac, en particulier de café, dans des emballages, dans lequel on ajuste la quantité de remplissage d'une machine de remplissage conformément au poids brut des emballages remplis et à une tare allouée, caractérisé en ce qu'on établit par échantillons de sondage la tare allouée qui tient compte du poids de l'emballage vide et en ce qu on amène la valeur déterminée du poids brut moins la valeur déterminée de la tare allouée et moins une tare allouée constante qui tient compte de fractions de poids constantes, telles que le poids de colle, le poids des étiquettes ou des poids analogues, à la machine de remplissage en tant que valeur de consigne dans une boucle de réglage fermée.

2. Procédé suivant la revendication 1, caractérisé en ce qu'on détermine la tare allouée par une pesée par sondage d'emballages vides.

3. Procédé suivant la revendication 2, caractérisé en ce qu'on effectue les sondages à des intervalles réguliers.

4. Procédé suivant une des revendications précédentes, caractérisé en ce qu'on fait la moyenne de plusieurs sondages et en ce qu'on prend pour base du réglage la valeur moyenne.

5. Procédé suivant la revendication 4, caractérisé en ce qu'on effectue une formation de valeur moyenne mobile sur un nombre défini d'emballages vides.

6. Procédé suivant la revendication 5, caractérisé en ce qu'on rejette la valeur d'un sondage individuel qui dévie de la valeur moyenne momentanée de plus qu'un montant maximal prédéterminé, sans l'utiliser pour la formation de valeur moyenne ultérieure.

7. Procédé suivant l'une des revendications 5 et 6, caractérisé en ce qu'on effectue la formation de valeur moyenne mobile dans deux grandeurs de groupes, un grand groupe et un petit groupe, et en ce qu'on prend pour base du réglage la valeur moyenne du petit groupe lorsque (et seulement lorsque) celui-ci dévie de la valeur moyenne du grand groupe d'au moins un montant prédéterminé.

8. Procédé suivant l'une des revendications précédentes, caractérisé en ce qu'on établit le poids brut par sondages.

9. Procédé suivant la revendication 8, caractérisé en ce qu'on prend les sondages de poids brut plus fréquemment que les sondages de tare.

10. Procédé suivant l'une des revendications précédentes, caractérisé en ce qu'on rejette les emballages vides pesés.

**11.** Dispositif de remplissage de matières en vrac, en particulier de café, comprenant une machine de formation de sacs (29) pour fabriquer des sacs à remplir (10), une balance de tare (16) pour peser des sacs à remplir, une machine de remplissage (28) pour remplir les sacs (10) par de la matière en vrac, une balance de poids brut (25) pour peser les sacs remplis (10) et une bande transporteuse (11) pour avancer les sacs (10), caractérisé par des moyens (changement de voie 32) pour évacuer des sacs vides (10) de la bande transporteuse (11), des moyens d'avancement (le tube de transport 13) pour transporter les sacs évacués à la balance de tare (16), un dispositif (22) d'entrée d'une tare allouée constante tenant compte de fractions de poids constantes, telles que le poids de colle, le poids des étiquettes ou des poids analogues, et une unité de réglage (21) qui, du côté entrée, est en liaison par des conducteurs de signaux avec des sorties de mesure de la balance de tare (16) et de la balance de poids brut (25) et dont la sortie de réglage (23) est, avec la machine de remplissage (28) et les moyens (32) d'évacuation des sacs vides, dans une liaison de commande telle que des sacs vides (10) sont évacués et posés dans une fréquence définie et que la machine de remplissage (28) est, en ce qui concerne la quantité de remplissage, ajustée conformément à la valeur déterminée du poids brut moins la valeur déterminée de la tare et la tare constante allouée.

**12.** Dispositif suivant la revendication 11, caractérisé en ce que le changement de voie (32) destiné à évacuer les sacs vides (10) comportent un dispositif de soufflage (18) à soupape commandable (19).

**13.** Dispositif suivant la revendication 12, caractérisé en ce que la bande transporteuse (11) comprend des ouvertures de passage pour lesquelles le dispositif de soufflage (18) est agencé de telle façon que les sacs (10) puissent être évacués vers le haut par soufflage en dehors de la ligne de transport.

**14.** Dispositif suivant l'une des revendications 11 à 13, caractérisé en ce que les moyens de transport (13) destinés à avancer les sacs évacués (10) se terminent à une distance définie au-dessus de la balance de tare (16) de façon que les sacs évacués (10) tombent sur un plateau (33) de la balance de tare (16).

**15.** Dispositif suivant la revendication 14, caractérisé en ce qu'au-dessus du plateau (33) de la balance de tare (16) est agencé un dispositif d'élimination (15) qui peut être actionné par l'unité de réglage (21), de telle façon que des sacs situés sur le plateau (33) de la balance puissent être amenés à une glissière d'évacuation (17).

**16.** Dispositif suivant l'une des revendications 14 et 15, caractérisé en ce qu'au-dessus du plateau (33) de la balance, est agencé un dispositif de détection (barrage photoélectrique 24) qui est relié à une entrée de l'unité de réglage (21) et qui est destiné à constater la présence de sacs (10) sur le plateau (33) de la balance.

**17.** Dispositif suivant l'une des revendications 12 à 16, caractérisé en ce que les moyens de transport (13) destinés à avancer les sacs évacués (10) sont réalisés sous la forme d'un conduit tubulaire.

**18.** Dispositif suivant la revendication 17, caractérisé en ce que le conduit tubulaire (13) s'étend sensiblement horizontalement dans sa section d'extrémité (34) et en ce qu'une chicane (14) est agencée perpendiculairement à la direction du tube et respectivement d'avancement, au-dessus du plateau (33) de la balance, de façon que les sacs avancés (10) soient freinés sur la chicane (14) et qu'ils tombent sur le plateau (33) de la balance.

**19.** Dispositif suivant la revendication 15, caractérisé en ce que les sacs (10) peuvent être éliminés de la balance de tare (16) au moyen d'air de soufflage d'un dispositif de soufflage (tuyère de soufflage).

**20.** Dispositif suivant l'une des revendications 11 à 19, caractérisé en ce que l'unité de réglage (28) est reliée, du côté entrée, à une unité d'entrée (22) par l'intermédiaire de laquelle les (autres) tares allouées sont entraînées.

**21.** Dispositif suivant l'une des revendications 11 à 20, caractérisé en ce que l'unité de réglage (21) comporte un calculateur (35).

**Fig. 1**

**Fig. 2**

**Fig. 3**

**Fig. 4**

Fig. 5